# EUROPEAN PATENT APPLICATION

(11) **EP 2 868 995 A1**
(43) Date of publication of application: **06.05.2015**
(21) Application number: 13382434.2
(22) Date of filing: 30.10.2013
(51) Int. Cl.: F24J 2/05, F24J 2/14, F24J 2/38, F24J 2/54, F24J 2/52, F24J 2/46

(54) **Tilting structure for solar panels**

(71) Applicant: Teknikran Soluciones Para Gruas, S.L., 20280 Hondarribia (ES)
(72) Inventor: Chinchurreta Diaz, Juan Cruz, 20280 Hondarribia (ES)
(74) Representative: Igartua, Ismael

(57) **Abstract**

A tilting structure for solar panels (2) which are arranged in rows (3), comprising a torsion bar for each row (3) of solar panels (2), where said torsion bar is suitable for rotating. The structure also comprises at least one support for each row (3) suitable for housing the solar panels (2), said support being integral with the corresponding torsion bar. Said structure also comprises an arm for each torsion bar wherein one end of said arm is attached in an integral manner to the torsion bar and the other end to drive means (6) which pull on or push the arm causing the torsion bar to rotate. Said drive means (6) comprise a tensioner (7) in the form of a cable wherein the ends of said tensioner (7) are wound on a reel (8) which is operated by operating means.

## Description

### TECHNICAL FIELD

The present invention is related to tilting structures for solar panels, particularly for solar panels that are arranged in rows.

### PRIOR ART

Tilting structures causing the rotation of an array of solar panels are known. Arranging said solar panels one after another such that they are arranged in rows is also known. Normally, these solar panels are mounted on a framework which is attached to a torsion bar such that the framework and subsequently the solar panels also rotate when rotating said torsion bar. The rows of solar panels are arranged in North to South orientation and the solar panels rotate East to West such that the panels adopt the best possible inclination so that they are oriented in the most suitable manner with respect to the changing position of the sun at all times.

WO2007011442 A1 discloses a tilting structure for solar panels where said panels are arranged one after another in lines. The solar panels are mounted on a framework which is attached to a torsion bar. There is a torsion bar for each row of solar panels. Each torsion bar comprises an arm attached at one end in an integral manner to said torsion bar. The other end of the arm is attached to drive means which pull on or push the arm, causing the torsion bar and subsequently the solar panels to rotate. The drive means comprise an actuator, which operated by a motor, moves forward or backward linearly. All the arms are attached to said actuator such that they can pivot. When the actuator moves forward, the arms pivot at one end, causing the opposite end, attached in an integral manner to the corresponding torsion bar, to rotate in one direction and when the actuator moves backward, the arms pivot, causing the opposite end, attached in an integral manner to the corresponding torsion bar, to rotate in the opposite direction, thus enabling the rotation of the solar panels. Since the actuator is a linear actuator, the rows are arranged parallel to and aligned with one another to prevent imbalances in the operating means.

### DISCLOSURE OF THE INVENTION

The object of the invention is to provide a tilting structure for solar panels as described below.

The tilting structure for solar panels of the invention, wherein the solar panels are arranged in rows, comprises a torsion bar for each row of solar panels. Said torsion bar is suitable for rotating about its longitudinal axis. The tilting structure also comprises at least one support for each row of solar panels suitable for housing the solar panels, said support being integral with the corresponding torsion bar. The structure also comprises an arm for each torsion bar wherein one end of said arm is attached in an integral manner to the torsion bar and the other end to drive means which pull on or push the arm causing the torsion bar to rotate. Said drive means comprise a tensioner in the form of a cable wherein the ends of said tensioner are wound on a reel which is operated by operating means.

With the tilting structure of the invention it is possible that said structure successfully adapts to the geometry and/or to the irregularities and conditions of the terrain on which the tilting structure is to be placed, the number of solar panels that can be comprised in the tilting structure in relation to the dimension and state of said terrain being optimized. The transport (smaller number of large parts) and assembly of the structure are also made easier. On the other hand, since the drive means are constantly pulling on or pushing each of the arms, which are attached to the corresponding torsion bar, they act as support elements protecting both the tilting structure and the solar panels from gusting wind, such that the drive means counteract any force exerted by the gusting wind, or by any other element, on the solar panels.

These and other advantages and features of the invention will become evident in view of the drawings and the detailed description of the invention.

### DESCRIPTION OF THE DRAWINGS

Figure 1 shows a perspective view of a first embodiment of the tilting structure according to the invention.
Figure 2A shows a perspective view of the tilting structure of Figure 1 with an array of solar panels arranged in rows.
Figure 2B shows a partial plan view of a second embodiment of the tilting structure with an array of solar panels arranged in rows.
Figure 2C shows a perspective view of a third embodiment of the tilting structure with an array of solar panels arranged in rows.
Figure 3A is a detail of a support post and of the pulley system of said post of the tilting structure of Figure 1.
Figure 3B is an I-I section view of the support post and of the pulley system of Figure 3A.
Figure 4A is a first schematic depiction of the operation of the drive means which are attached to arms of the tilting structure of Figure 1.
Figure 4B is a second schematic depiction of the operation of the drive means which are attached to arms of the tilting structure of Figure 1.
Figure 5 is a detail of the support means of an arm of the tilting structure of Figure 1.
Figure 6 is a partial perspective view of the tilting structure with the solar panels of Figure 2A.
Figure 7 is a detailed perspective view of the arrangement of a panel in the tilting structure of Figure 2A.
Figure 8 is a detail of the reel of the drive means of the tilting structure of Figure 1.

### DETAILED DISCLOSURE OF THE INVENTION

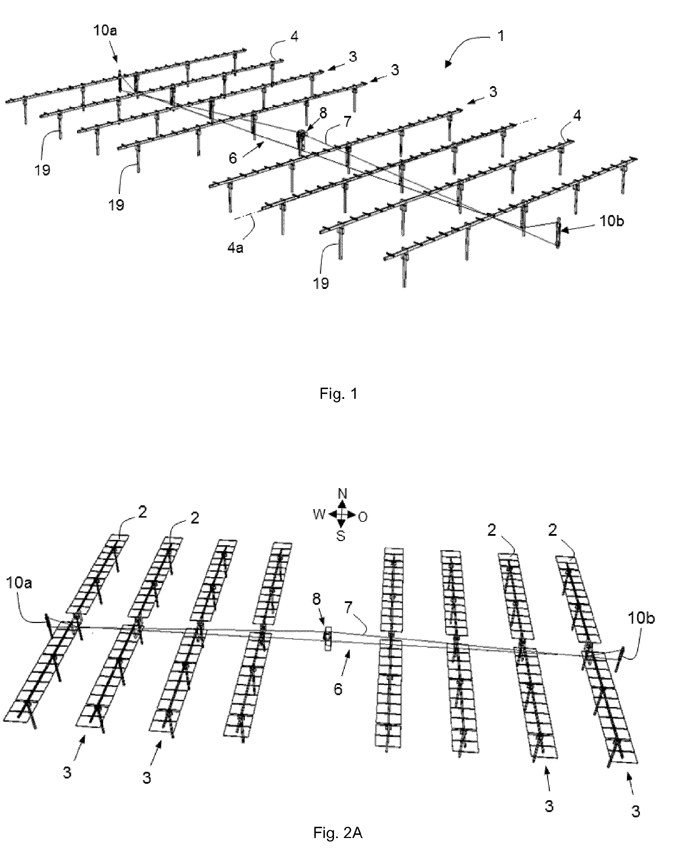

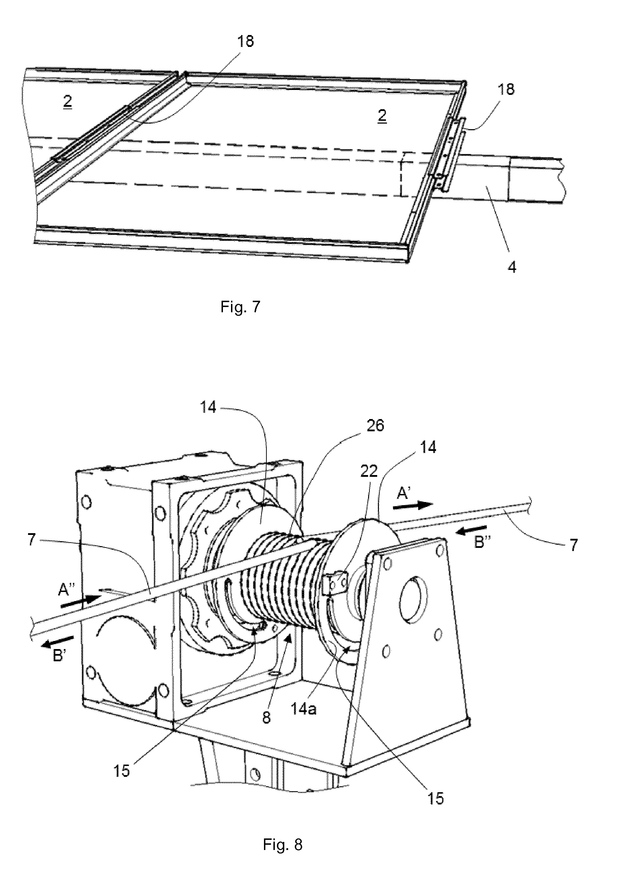

Figure 1 shows a perspective view of a first embodiment of the tilting structure 1 according to the invention. Solar panels, preferably photovoltaic panels, are placed on the tilting structure 1, although solar collectors could also be placed thereon, such that they are arranged in rows 3 as seen in Figure 2A, for example. As seen in the example of Figure 1, the structure 1 comprises a torsion bar 4 for each row 3 of solar panels 2, at least one support 18 (shown in detail in Figure 7) for each row 3 of solar panels 2 for housing the solar panels 2, and an arm 5 for each torsion bar 4 wherein one end of said arm 5 is attached in an integral manner to the torsion bar 4, whereas the other end is attached to drive means 6 which pull on or push the arm 5 causing the torsion bar 4 to rotate.

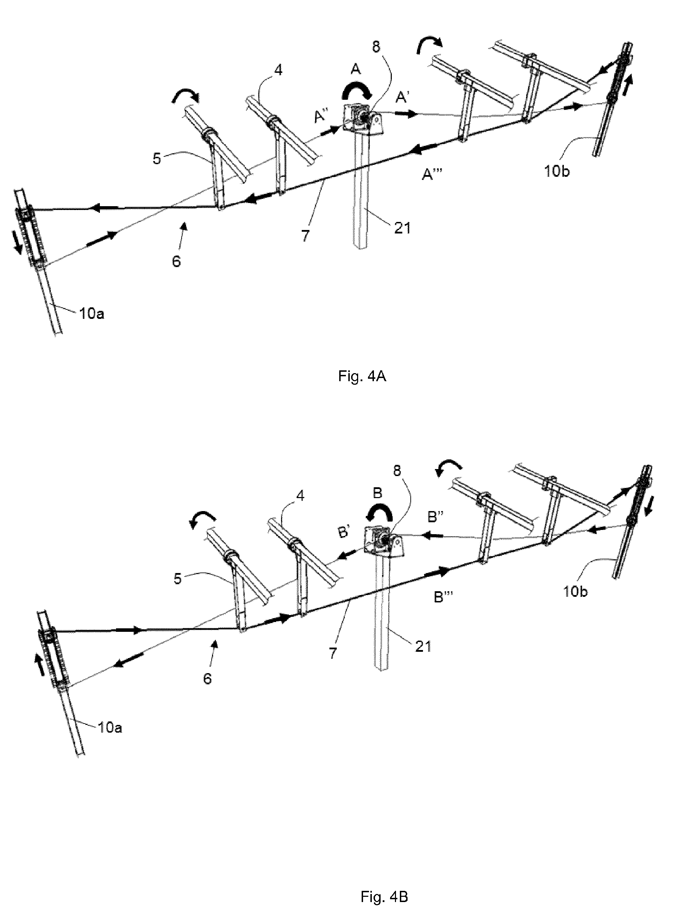

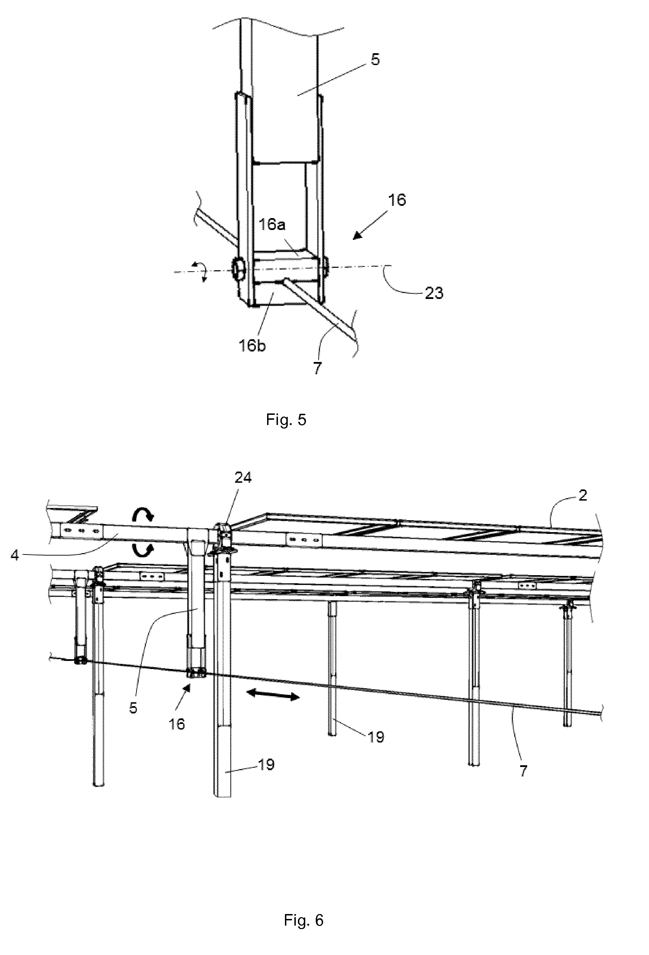

In this first embodiment, each arm 5 is arranged approximately at the center of gravity of the corresponding torsion bar 4, thereby contributing in minimizing the efforts necessary to cause the rotation of the torsion bars 4. Likewise, also according to this first embodiment, each support 18 houses two solar panels 2, as shown in Figure 7, two supports 18 being necessary for supporting one panel 2. In the example of Figure 1, a plurality of supports 18 has been arranged on a torsion bar 4 for housing an array of panels 3 for each row 3. The torsion bar 4 is suitable for rotating about its longitudinal axis 4a and since each support 18 is integral with the corresponding torsion bar 4, when the drive means 6 pull on or push the arm 5, they cause the rotation of the torsion bar in one direction or another, whereby the panels 2 arranged on said torsion bar 4 also rotate, as intended to be shown in Figures 4A, 4B and 6.

For effectively pulling on or pushing the arms 5, the drive means 6 comprise a tensioner 7 in the form of a cable wherein the ends of said tensioner 7 are wound on a reel 8 which is operated by operating means causing the rotation of said reel 8 in one direction or another. By way of example, a cable made of steel like that used in lifts has been used in the embodiment of Figure 1 although cables of another type are not discounted provided that they are capable of pulling on or pushing the arms 5 as well as keeping the arms 5 in the working position when the reel 8 is not operated. Working position is understood as that stationary position obtained in the structure 1 when the reel 8 stops rotating.

Each arm 5 converts the translational movement of the drive means 6, particularly of the tensioner 7, into a rotational movement which is transmitted to the corresponding torsion bar 4.

The tilting structure 1 according to the first embodiment is raised with respect to ground level through pillars 19 that are distributed along the torsion bars 4 and which support said structure 1. In the example of Figure 1, each torsion bar 4 comprises four uniformly distributed pillars 19. Each torsion bar 4 is suitable for rotating with respect to said pillars 19 and to that end each pillar 19 comprises means 24 that enable linearly fixing the torsion bar 4 but that allow the rotation of said torsion bar 4 as seen in Figure 6.

The reel 8 as well as the operating means (not shown in the drawings) are also raised with respect to ground level through a main pillar 21 which is anchored to the ground, like pillars 19.

To enable the attachment between the arm 5 and the tensioner 7 of the drive means 6, each arm 5 comprises support means 16 at the free end, such as those shown by way of example in Figure 5, free end being understood as the end opposite the end attached in an integral manner to the torsion bar 4. These support means 16 firmly hold the tensioner 7 in immovable way, said support means 16 being suitable for rotating with respect to the corresponding arm 5 to keep the tensioner 7 in alignment.

To make assembly easier, the support means 16 comprise an upper portion 16a and a lower portion 16b attached to one another by attachment means, preferably screws (not shown in the drawings), the tensioner 7 being held between both portions 16a and 16b. In the non-limiting example of Figure 5 of the first embodiment of the invention, the lower portion 16b and the upper portion 16a are attached to one another by means of four screws that are introduced through the lower base of the lower portion 16b. In turn, the upper portion 16a can rotate freely with respect to the longitudinal axis 23, said axis 23 being substantially parallel to the transverse axis of the corresponding arm 5. To that end, the upper portion 16a comprises a through hole with a screw, stud, bolt or the like going through same, such that it allows fixing the support means 16 to the corresponding arm 5 while at the same time allows the rotation of the support means 16 in said longitudinal axis 23.

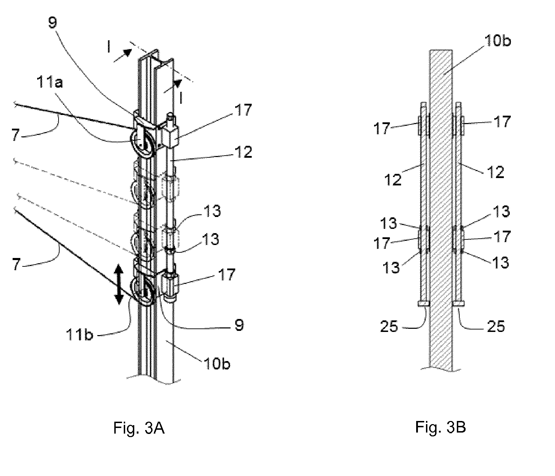

According to the first embodiment of the invention, the drive means 6 comprise two support posts 10a and 10b which are spaced apart from one another and retaining said tensioner 7 by means of a pulley system as seen in Figures 1, 2A, 3A, 4A and 4B. Each support post 10a and 10b comprises two pulleys 11 a and 11b faced and spaced apart from one another as can be seen in detail in Figures 3A and 3B, changing the relative distance between both pulleys 11a and 11b of each support post 10a and 10b being possible, which is especially advantageous for tightening or loosening the tensioner 7 in a simple, fast and efficient manner. The tensioner 7 can possibly be loosened or tightly pressed because it is subjected to expansion or shrinkage, for example due to the inclemency of the weather (changes in temperature between summer and winter, etc...), tightening or loosening it again being necessary so that the tilting structure 1 works correctly.

In the first embodiment of the invention the system of pulleys mentioned above comprises a fixed pulley 11a and a moving pulley 11b for each support post 10a and 10b, said fixed pulley 11a being arranged in a fixed position with respect to the corresponding support post 10a or 10b, and said moving pulley 11 b being movable with respect to the corresponding support post 10a or 10b such that it is possible to change the relative position of the moving pulley 11 b with respect to the fixed pulley 11a as seen in Figure 3A. In one variant of the invention, not shown in the drawings, both pulleys 11 a and 11 b could be movable for moving them closer to or away from one another, thus changing their relative position.

Back to the example of Figure 3A, the pulley system comprises a first guide element 12 in the form of a rod for each support post 10a and 10b comprising at least one partially threaded zone, over which at least one of the pulleys 11 a or 11 b, preferably the moving pulley 11 b, slides. To make sliding the moving pulleys 11 b easier, the system of pulleys also comprises a second guide element 12 for each support post 10a and 10b, having identical features as the first guide element 12, each guide element 12 being arranged on one side of the corresponding support post 10a and 10b as seen in more detail in Figure 3B. Therefore, the moving pulley 11 b of each support post 10a and 10b is suitable for sliding over the first and the second guide element 12 in a simple and fast manner, preventing the risk of the moving pulley 11 b being jammed when sliding. Although the moving pulley 11 b of each support post 10a and 10b can be interchangeably placed above or below the corresponding fixed pulley 11a, in the example of Figure 3A the moving pulley 11b is arranged below the fixed pulley 11a.

Each pulley 11 a and 11 b of each support post 10a and 10b is mounted in a framework 9 comprising a guide block 17 for each guide element 12 and cooperating with said guide element 12. Each guide element 12 is in the form of a rod and comprises at least one threaded section. In the example of Figures 3A and 3B, the framework 9 of each pulley 11 a and 11 b of each support post 10a and 10b comprises two guide blocks 17, each of them cooperating with the corresponding guide element 12.

Each guide block 17 comprises a hole with the corresponding guide element 12 going through same. In the example of Figures 3A and 3B, the hole of the guide blocks 17 of the fixed pulley 11a of each support post 10a and 10b is a threaded hole. In this non-limiting example, the framework 9 of the fixed pulley 11a of each support post 10a and 10b is fixed to the corresponding support post 10a or 10b and the other elements, such as the guide elements 12 and the moving pulley 11 b, are arranged on said fixed pulley 11a as detailed below.

Following with the example of Figures 3A and 3B, once the fixed pulley 11 a of each support post 10a and 10b is fixed to the corresponding post 10a or 10b, a first threaded section of the guide element 12, preferably located at one end of said guide element 12, is attached with the threaded hole of the corresponding guide block 17, which allows keeping said guide element 12 in a stable position with respect to the fixed pulley 11a, any unwanted movement between the fixed pulley 11a and the guide element 12 being prevented. If there was a second guide element 12 for each support post 10a and 10b, such as in the case of the example, the operation is repeated for each guide element 12 assuring that both guide elements 12 are leveled. However, before attaching the first threaded section of the guide elements 12 with the threaded holes of the guide blocks 17 of the corresponding fixed pulley 11a, the moving pulley 11 b of each support post 10a and 10b must be mounted in the corresponding guide elements 12. To that end, each guide element 12 is introduced through the hole of the guide block 17 of the corresponding moving pulley 10b. For fixing and locking the position of the moving pulley 11 b of each support post 10a and 10b, the pulley system comprises fixing means 13 cooperating with a second threaded section of each guide element 12. In the example of Figures 3A and 3B, the fixing means 13 used are a nut and a locknut for each block 17 of the moving pulley 11 b. Each guide element 12 can comprise two independent threaded zones each of them interacting with the hole of the corresponding block 17 of the corresponding pulley 11 a or 11 b, or optionally each guide element 12 can also comprise a single threaded zone the length of which must be such that it is capable of interacting both with the blocks 17 of the fixed pulley 11 a and with the blocks of the moving pulley 11 b, taking into account that said moving pulley 11 b can be moved. Each guide element 12 comprises a stop 25 at one end to assure that the support means 13 and the corresponding moving pulley 11 b are always interacting with said guide element 12, particularly during the assembly process.

Figure 3A depicts the fixed pulley 11a and the moving pulley 11b of the support post 10b. The dotted lines intend to depict some of the different positions of the moving pulley 11 b. Said moving pulley 11 b can be locked in any position of the threaded zone of the guide element 12, in this example, of the two guide elements 12 each of which is arranged on each side of the support post 10b. The locked position of the moving pulley 11 b will be called the working position.

The tensioner 7 of the drive means 6 can be tightened or loosened as described below. It is assumed that the moving pulley 11 b is positioned in one of the positions indicated by the dotted lines and that the tensioner 7 needs to be tightened. In this case, by turning the nut 13 (arranged below the corresponding block 17) of each guide element 12, said nut 13 moves downwards to the desired position. Then the moving pulley 11 b moves downwards until it abuts the nut 13 so that the moving pulley 11b moves away from the fixed pulley 11a. Finally, the locknut 13 is tightened to lock the moving pulley 11b in the new position. Since in this case the support post 10b comprises two guide elements 12 it must be assured that the moving pulley 11 b is leveled although it is not an essential condition.

To loosen the tensioner 7, the process is reversed, i.e., the moving pulley 11 b and the fixed pulley 11a must be moved closer to one another. In this case, the locknut 13 described in the preceding step would now perform the function of the nut and the described nut 13 would perform the function of the locknut.

What is described for the example of Figure 3A is also valid for the system of pulleys mounted on the other support post 10a.

Figure 4A schematically depicts the operation of the tilting structure 1 when the reel 8 rotates according to direction A. In said drawing, the pillars 19 have been omitted for the sake of clarity and only part of some of the torsion bars 4 with the arms 5 has been shown. The tensioner 7 comprises two ends wound on a reel 8 which comprises a type of thread spool as shown in Figure 8. For the sake of clarity, the wound ends of the tensioner 7 have not been depicted in said drawing.

The reel 8 comprises a main body 26 comprising notches which allows winding the end of the tensioner 7 to be wound thereon, and it also comprises on each side a base 14 having a larger diameter than the main body 26. Each base 14 comprises an opening 15 or the like allowing the passage of one end of the tensioner 7 in order to fix it on the outer face 14a of the reel 8. The assembly of the drive means 6 is thus greatly simplified. Once one end of the tensioner 7 is wound on the main body 26, it is fixed on the outer face 14a of one of the bases 14, and once the other end of the tensioner 7 is wound on the main body 26, it is fixed on the outer face 14a of the other base 14. To that end, after the corresponding end of the tensioner 7 passes through the opening 15 of the corresponding base 14, it is fixed to the outer face 14a of said base 14 by means of a retainer 22 which is fixed to the outer face 14a of the base 14 as shown in Figure 8. Said retainer 22 holds the end of the tensioner 7 against the base 14. Said retainer 22 could optionally comprise two portions which are attached to one another holding the tensioner 7 between both portions. In the example of Figure 8, the opening 15 of each base 14 comprises a crescent-shaped hole but other shapes are not discounted provided that the passage of the end of the tensioner 7 is allowed, such as for example an oval-shaped hole, triangular-shaped hole, etc., and it could even comprise a notch located at the edge of the base 14 instead of a hole.

The drive means 6 are mounted as described below. One end of the tensioner 7 is fixed to the outer face 14a of one of the bases 14, as has already been described in the preceding paragraph, and wound on the main body 26. Then the tensioner 7 is directed towards one of the support posts 10a or 10b, for example towards the post 10b, and the tensioner 7 first passes over the pulley arranged in the lower portion of the post 10b, which in this embodiment corresponds with the moving pulley 11 b, and then over the pulley arranged in the upper portion of the post 10b, which in this embodiment corresponds with the fixed pulley 11a. Next, the tensioner 7 is held by the support means 16 of each arm 5 and the tensioner 7 is then directed towards the other support post, in this case the post 10a, the tensioner 7 first passing over the pulley arranged in the upper portion of the post 10a, which in this embodiment corresponds with the fixed pulley 11 a, and then over the pulley arranged in the lower portion of the post 10a, which in this embodiment corresponds with the moving pulley 11 b. Finally, the free end of the tensioner 7 is wound on the main body 26 of the reel 8 and fixed on the outer face of the other base 14 (the same way the first end of the tensioner 7 is fixed). If necessary, the tensioner 7 can be tightened by adjusting the relative distance between the pulleys 11a and 11 b of each support post 10a and 10b.

Hereinafter the section of the tensioner 7 that tends to unwind from the reel 8 will be called primary tensioner and the section of the tensioner 7 that tends to wind on the reel 8 will be called secondary tensioner. Therefore, when the reel 8, operated by the operating means, rotates in direction A as shown in Figure 4A, the primary tensioner moves according to direction A' away from the reel 8, and the secondary tensioner moves according to direction A", being wound on the reel 8. The primary tensioner and the secondary tensioner move the same distance, keeping the length of the cable of the tensioner 7 that is not wound on the reel 8 constant at all times. The tensioner 7 simultaneously pulls on all the arms 5 according to direction A'" causing the corresponding torsion bars 4 to rotate in the same rotating direction as the reel 8. When the tilting structure 1 has reached the desired position and the reel 8 stops rotating, the structure 1 is maintained in said position, called working position, because the tensioner 7 continues to pull on the arms 5, which is especially advantageous for protecting the structure 1 and the solar panels 2, for example, from gusting wind since the drive means 6 can counteract any force exerted on the panels, even that exerted by the gusting wind.

Figure 4B also schematically depicts the operation of the tilting structure 1 but when the reel 8 rotates according to direction B, opposite direction A. Like in Figure 4A, the pillars 19 have also been omitted and only part of some of the torsion bars 4 with the arms 5 has been shown. When the reel 8, operated by the operating means, rotates in direction B, opposite direction A, as shown in Figure 4B, the primary tensioner moves according to direction B' away from the reel 8, and the secondary tensioner moves according to direction B", being wound on the reel 8. The primary tensioner and the secondary tensioner move the same distance, keeping the length of the cable of the tensioner 7 that is not wound on the reel 8 constant at all times. The tensioner 7 simultaneously pulls on all the arms 5 according to direction B'" causing the corresponding torsion bars 4 to rotate in the same rotating direction as the reel 8. Like in the example of Figure 4A, when the tilting structure 1 has reached the desired working position and the reel 8 stops rotating, the structure 1 is maintained in said position.

Each torsion bar 4 comprises a longitudinal axis 4a about which said bar 4 can rotate, said longitudinal axis 4a being arranged approximately at the center of each solar panel 2, said longitudinal axis 4a thus coinciding with the axis of alignment of the solar panels 2 arranged in a row 3. Each torsion bar 4 can be formed by a single piece, or by a set of sub-bars which are firmly attached in immovably way to one another to form the torsion bar 4, which is especially advantageous for transporting the components of the tilting structure 1 to the terrain where said structure 1 is to be mounted.

The rows 3 of the solar panels 2 are arranged according to the North to South orientation and the solar panels 2 rotate East to West with the tilting structure 1 of the invention such that the panels 2 adopt the best possible inclination so that they are oriented in the most suitable manner to the changing position of the sun at all times. The drive means 6 provide a reliable and efficient tilting system. Therefore, all the panels 2 arranged in the structure 1 rotate at the same time in a synchronized manner and since said drive means 6 are constantly pulling on or pushing each of the arms 5, the panels 2 are kept in the adopted position while at the same time they can counteract any force exerted on the panels 2, for example the force exerted by gusting wind as has already been described. Therefore, said drive means 6 can also act as support elements protecting the tilting structure 1.

The rows 3 of solar panels 2, i.e., the torsion bars 4, can be arranged aligned with one another, such that a geometric shape having a substantially square or rectangular appearance is created. In the example of Figure 2A, the rows 3 of solar panels 2 are arranged parallel to and aligned among each other such that a substantially rectangular structure is created. The reel 8 and the operating means, not shown in the drawings, are arranged approximately at the geometric center of said formed structure. With this arrangement, the efforts necessary for pulling on or pushing the arms 5 are balanced since the length of the primary tensioner and of the secondary tensioner is approximately the same.

Similarly, since the arms 5 are arranged at the center of gravity of the corresponding torsion bar 4 the efforts necessary for causing the rotation of the solar panels 2 can be further minimized, being able to resize the operating means accordingly (less force requirement, smaller motor size, cost reduction). As seen in Figure 2A, single operating means are sufficient to cause the rotation of all the solar panels 3 arranged in the tilting structure 1 in a synchronized, efficient and economical manner.

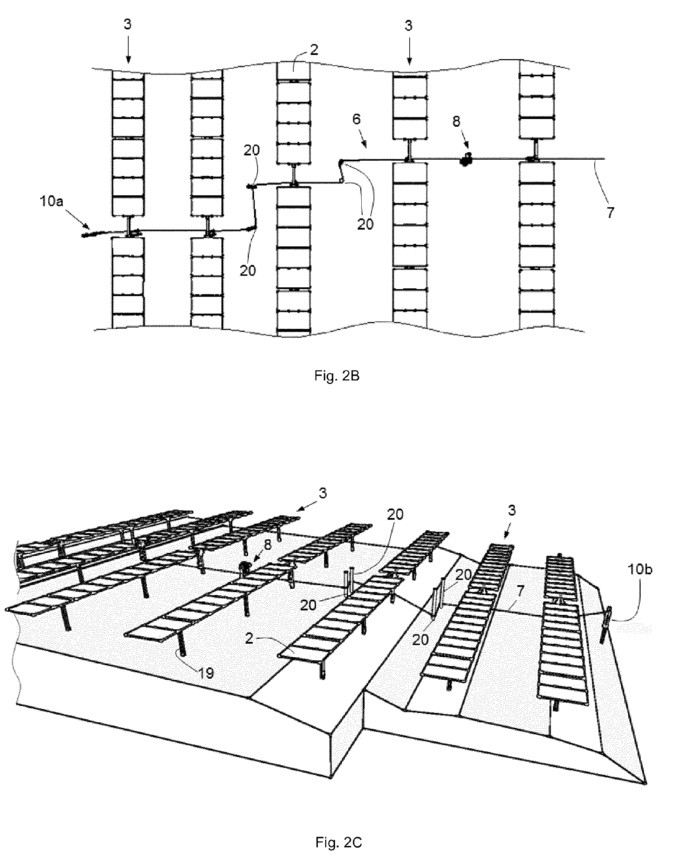

In a second embodiment of the invention, which comprises all the features of the tilting structure 1 of the first embodiment, some rows 3, i.e., some torsion bars 4, can be arranged such that they are not aligned with another so that it is possible to create any geometric shape. The example of Figure 2B shows partially and in a nonlimiting manner an array of solar panels 2 arranged such that they are in parallel rows 3 but not aligned with one another. The arms 5 of each torsion bar 4 are arranged approximately at the center of gravity of the corresponding bar 4, therefore, for redirecting the tensioner 7 from one arm 5 to the next arm 5, the tilting structure 1 according to this second embodiment comprises guide posts 20 preferably arranged in pairs in those zones in which the arms 5 of two contiguous rotating bars 4 are not in alignment. This thus assures keeping at least one section of the tensioner 7 in alignment in a direction substantially perpendicular to the longitudinal axis 23 of the support means 16 of the arm 5 to assure that the tensioner 7 can effectively pull on or push the corresponding arm 5. This arrangement is especially advantageous for adapting to the irregularities and conditions of the terrain on which the tilting structure 1 is to be placed. Therefore, as shown in Figure 2B, a first guide post 20 and a second guide post 20 are arranged between two rows 3 that are not in alignment, at approximately half the distance of said rows 3, the first guide post 20 being aligned with the arm 5 of a first row 3 according to a direction substantially perpendicular to the longitudinal axis 23 of the support means 16 of the corresponding arm 5, and the second guide post 20 being aligned with the arm 5 of the next row 3 according to a direction substantially perpendicular to the longitudinal axis 23 of the support means 16 of the corresponding arm 5. For the sake of clarity, only a section of the tensioner 7 has been shown in this Figure 2B.

The solution of the guide posts 20 redirecting the tensioner 7 from one arm 5 to the next arm 5 of the tilting structure 1 is also very useful when the tilting structure 1 is arranged on terrain that is uneven and/or that can comprise any geometry. Therefore, the example of Figure 2C shows partially and in a non-limiting manner a tilting structure 1 according to a third embodiment, which comprises each and every one of the features of the second embodiment, wherein an array of solar panels 2 are arranged such that they are in parallel rows 3 but not all aligned with one another, nor are all the rows 3 on the same level or plane. The guide posts 20 are arranged in pairs in those zones in which the arms 5 of two contiguous rotating bars 4 are not in alignment and/or on the same level. Therefore, as in the example of Figure 2B, this assures keeping at least one section of the tensioner 7 in alignment in a direction substantially perpendicular to the longitudinal axis 23 of the support means 16 of the arm 5 to assure that the tensioner 7 can effectively pull on or push the corresponding arm 5.

Therefore, the tilting structure 1 of the invention is suitable for adapting to the irregularities, unevenness and conditions of the terrain on which the tilting structure 1 is to be placed, the number of solar panels 2 that can be comprised in the tilting structure 1 in relation to the dimension and state of said terrain being optimized.

In all the described embodiments, the reel 8 and the operating means are preferably arranged approximately at the geometric center of the created structure of the tilting structure 1 to better balance out and compensate for the efforts of the drive means 6.

## Claims

1. Tilting structure for solar panels (2) arranged in rows (3), comprising a torsion bar (4) for each row (3) of solar panels (2), said torsion bar (4) being suitable for rotating about its longitudinal axis (4a), at least one support (18) for each row (3) of solar panels (2) suitable for housing said solar panels (2), said support (18) being integral with the corresponding torsion bar (4), an arm (5) for each torsion bar (4) wherein one end of said arm (5) is attached in an integral manner to the torsion bar (4) and the other end is attached to drive means (6) pulling on or pushing the arm (5) causing the torsion bar (4) to rotate, **characterized in that** said drive means (6) comprise a tensioner (7) in the form of a cable wherein the ends of said tensioner (7) are wound on a reel (8) which is operated by operating means.

2. Structure according to claim 1, wherein each torsion bar (4) is arranged following the axis of alignment of the solar panels (2) forming the corresponding row (3) of panels (2), being arranged approximately at the center of each solar panel (2).

3. Structure according to claim 1 or 2, wherein each arm (5) is arranged approximately at the center of gravity of the corresponding torsion bar (4).

4. Structure according to any of the preceding claims, wherein the reel (8) is arranged approximately at the geometric center of said structure (1).

5. Structure according to any of the preceding claims, wherein said structure (1) also comprises guide posts (20) suitable for redirecting the tensioner (7) such that said tensioner (7) can pull on or push each arm (5) even though at least several rows (3) are not aligned among each other and/or are not at the same level.

6. Structure according to any of the preceding claims, wherein the drive means (6) comprise two support posts (10a, 10b) spaced apart from one another retaining the tensioner (7) by means of a pulley system.

7. Structure according to claim 6, wherein the pulley system of each support post (10a, 10b) comprises two pulleys (11 a, 11 b) faced and spaced apart from one another, the relative distance between both pulleys (11a, 11 b) of each post (10a, 10b) being able to be changed.

8. Structure according to claim 7, wherein the pulley system also comprises a first guide element (12), in the form of a rod, at least partially threaded for each support post (10a, 10b).

9. Structure according to claim 8, wherein said pulley system comprises a second guide element (12) for each support post (10a, 10b), each guide element (12) being arranged on one side of the corresponding support post (10a, 10b).

10. Structure according to any of claims 8 to 9, wherein each pulley (11a, 11b) of each support post (10a, 10b) is mounted in a framework (9) comprising a guide block (17) for each guide element (12) and cooperating with said guide element (12).

11. Structure according to claim 10, wherein each guide block (17) comprises a hole with the corresponding guide element (12) going through same, the hole of the guide block (17) of at least one of the pulleys (11a, 11 b) of each support post (10a, 10b) being preferably a threaded hole.

12. Structure according to any of claims 6 to 11, wherein the pulley system comprises fixing means (13) for fixing and locking the working position of at least one of the pulleys (11a, 11b) of each support post (10a, 10b).

13. Structure according to any of claims 6 to 12, wherein the pulley system comprises a fixed pulley (11 a) and a moving pulley (11 b) for each support post (10a, 10b), said fixed pulley (11a) being arranged in a fixed position with respect to the corresponding support post (10a, 10b) and said moving pulley (11 b) being slidable over the corresponding support post (10a, 10b), allowing the moving pulley (11b) to change the relative position with respect to the fixed pulley (11a).

14. Structure according to any of the preceding claims, wherein the reel (8) comprises a main body (26) and a base (14) on each side, the bases (14) having a larger diameter than the main body (26), each base (14) comprising at least one opening (15) allowing the passage of one end of the tensioner (7) in order to fix it on the outer face (14a) of the reel.

15. Structure according to any of the preceding claims, wherein the arm (5) comprises support means (16) at the end which is attached to the drive means (6) such that said support means (16) firmly hold the tensioner (7) in an immovably way, said support means (16) being suitable for rotating with respect to the arm (5) to keep the tensioner (7) in alignment, said support means (16) comprising preferably an upper portion (16a) and a lower portion (16b) attached to one another by attachment means, preferably screws, the tensioner (7) being retained between both portions (16a, 16b).
